# FASCICULE DE BREVET EUROPEEN

(11) **EP 0 480 850 B1**
(45) Date de publication et mention de la délivrance du brevet: **28.06.1995**
(21) Numéro de dépôt: 91420352.6
(22) Date de dépôt: 08.10.1991
(51) Int. Cl.: B22D 19/08, C22C 1/10

(54) **Procédé pour la réalisation de pièces à surface antiabrasion**
Verfahren zur Herstellung von Werkstücken mit reibverschleissfester Oberfläche
Method of forming bodies having an abrasion resistant surface

(30) Priorité: 11.10.1990 FR 9012713
(43) Date de publication de la demande: 15.04.1992
(73) Titulaire: TECHNOGENIA S.A., 74410 Saint-Jorioz (FR)
(72) Inventeur: Brunet, Pierre, F-73250 Saint Pierre d'Albigny (FR); Maybon, Guy, F-74410 Saint Jorioz (FR); Pizzini, Gérard, F-74410 Saint Jorioz (FR)
(74) Mandataire: de Beaumont, Michel

(56) Documents cités:
- EP-A- 0 123 961
- EP-A- 0 123 961
- DE-A- 3 816 348
- FR-A- 1 398 732
- FR-A- 2 160 117
- FR-A- 2 352 890
- FR-A- 2 352 890
- FR-A- 2 504 426
- GB-A- 2 003 932
- GB-A- 2 219 537
- US-A- 3 175 260

## Description

La présente invention concerne la fabrication des pièces métalliques composites comportant une surface de contact destinée à résister à l'abrasion.

On connaît de telles pièces mécaniques dites pièces "d'usure", qui sont renforcées superficiellement par un apport d'un matériau présentant des caractéristiques améliorées au plan de la résistance à l'usure par abrasion.

Parmi les moyens communément mis en oeuvre pour obtenir une surface de contact renforcée, on peut mentionner les techniques d'apport d'alliages durs par soudage. Ces techniques sont communément désignées par les techniciens sous la dénomination "rechargement dur".

La présente invention concerne plus particulièrement les rechargements durs mettant en oeuvre une structure de grains de haute dureté liés entre eux par un alliage métallique que l'on désigne communément sous le terme de matrice métallique.

Le rechargement dur par soudage peut mettre en oeuvre une grande variété de procédés et de matériaux. On peut avantageusement utiliser un rechargement dur à base de carbure de tungstène ou d'autres matériaux à grande dureté. On utilise par exemple des baguettes rigides ou des baguettes souples, dont une extrémité est appliquée sur la surface à recharger et est soumise à un arc électrique ou à une flamme oxyacétylénique. La baguette comprend une poudre de carbure de tungstène noyée dans un alliage à base de nickel ou d'autres métaux appropriés.

Un tel rechargement dur obtenu avec les baguettes à base de carbure de tungstène présente un certain nombre d'inconvénients.

En particulier, les procédés de soudage conduisent à déposer le rechargement sous forme de cordons successifs, juxtaposés côte à côte les uns après les autres. On comprend que la réalisation d'une surface relativement importante à l'aide d'une telle technique est fastidieuse, et requiert une certaine dextérité et une certaine habitude de la part de l'opérateur.

Les vagues inhérentes à un tel procédé de dépôt de matières, reproduisant la forme des cordons successifs, entraînent des irrégularités d'épaisseur pouvant atteindre plusieurs millimètres. Il en résulte que cette technique ne permet pas de réaliser des pièces dont les dimensions sont précises. Et cette technique ne permet pas de réaliser des pièces dont les formes sont complexes, comportant par exemple des rainures et des nervures, des creux, des arêtes vives. Les irrégularités de soudage se trouvent augmentées lorsque les pièces à recharger présentent des formes complexes.

On a proposé, dans le document EP-A-0 123 961, un procédé qui s'apparente aux procédés traditionnels de fonderie : au cours d'une première étape, on coule un métal liant fondu dans un moule à sable froid ; au cours d'une étape ultérieure, on asperge le métal fondu contenu dans le moule avec une poudre dure qui descend dans le fond du moule et constitue la couche dure liée continument à la couche d'alliage fondue supérieure. Un tel procédé, difficile à mettre en oeuvre, ne permet pas de maitriser la densité et la forme de la couche antiabrasion réalisée.

On a aussi proposé, dans le document GB-A-2 003 932, un procédé de moulage par fusion de poudres contenues dans un moule. Les moules décrits dans ce document sont en graphite ou en alliage de molybdène.

Le document FR-A-2 160 117 décrit un procédé pour revêtir intérieurement un cylindre par moulage par centrifugation. On remplit le cylindre avec un alliage liant et des particules de matière dure. On porte l'ensemble à température élevée dans un four. En début de refroidissement, on imprime une rotation rapide au cylindre, pour forcer les particules dures à se déplacer vers l'extérieur contre la paroi du cylindre. Après refroidissement, on usine l'intérieur du cylindre pour l'amener au diamètre désiré.

On connait également des procédés de réalisation de couche en matière composite antiabrasion, mettant en oeuvre les techniques d'infiltration, par exemple la technique décrite dans les brevets français FR-A-1 398 732 ou FR-A-2 352 890. Selon ces techniques, on utilise un moule creux en carbone ou en matière céramique ayant une forme désirée ; on place un noyau dans le creux du moule, en regard des parois de moulage du moule ; on remplit avec des grains de carbure de tungstène ou équivalent l'espace intérieur creux compris entre le noyau et les parois de moulage du moule, en vibrant l'ensemble pour tasser les grains ; on place des grains ou pastilles de métal ou d'alliage liant au-dessus des grains de carbure ; on chauffe l'ensemble à une température supérieure à la température de fusion de l'alliage et inférieure à la température de fusion du noyau et du moule : l'élévation de température assure la fusion de l'alliage ou métal liant, qui s'infiltre dans l'espace rempli de grains de carbure de tungstène, et assure la soudure avec le noyau lorsque celui-ci est en métal. On laisse ensuite refroidir et on peut démouler.

Cette technique d'infiltration convient assez bien pour des pièces présentant des surfaces antiabrasion planes. Le moule peut en effet être alors réalisé à moindre coût, sans nécessiter un usinage complexe. Par contre, le procédé devient totalement inapproprié pour la réalisation de pièces dont la surface antiabrasion présente une forme non plane, par exemple une surface comportant des rainures et des nervures. La réalisation du moule en céramique ou en carbone est alors une opération beaucoup trop complexe et onéreuse, de sorte que le procédé ne peut pas être pas utilisé industriellement.

La présente invention a notamment pour objet d'éviter les inconvénients des procédés connus, en proposant un nouveau procédé d'infiltration pouvant être mis en oeuvre à l'aide de moyens peu onéreux, évitant d'avoir recours à des moules onéreux en céramique ou en carbone.

Un objet de l'invention est d'appliquer cette nouvelle technique à la réalisation de pièces dont la surface antiabrasion est non plane, mais peut présenter des irrégularités de surface importantes telles que des nervures, rainures, ou tout autre forme que l'on peut habituellement obtenir par moulage.

Par exemple, l'invention vise à appliquer ces nouvelles techniques de réalisation de surfaces antiabrasion par infiltration pour fabriquer des pièces particulières, et en particulier des tubes à surface intérieure antiabrasion, ou des plaques de broyeurs. De telles plaques de broyeurs comportent des nervures et des rainures, et servent par exemple au défibrage ou à l'affinage de la pâte à papier, ou au broyage de matières céramiques. Ces applications conduisent à augmenter sensiblement, et de manière surprenante, les qualités et l'efficacité des dispositifs ainsi réalisés.

Le procédé de réalisation d'une surface de l'invention comprend la succession des étapes suivantes :
- préparer un moule creux comprenant des parois de moulage ayant la forme de la surface antiabrasion à réaliser,
- introduire des particules de matière dure, telle que du carbure de tungstène fondu, dans l'espace intérieur creux du moule, en vibrant l'ensemble, de sorte que les particules superficielles viennent le plus possible en appui contre les parois du moule et sont jointives les unes aux autres,
- préparer une quantité suffisante d'un alliage approprié sous forme adaptée pour assurer une répartition ultérieure de l'alliage au cours de sa phase de fusion ultérieure, l'alliage étant un alliage de brasage susceptible de mouiller les particules de matière dure et de fondre à une température inférieure à la température de fusion des particules de matière dure et du moule,
- chauffer l'ensemble à une température supérieure à la température de fusion de l'alliage et inférieure à la température de fusion des matières dures et du moule,
- maintenir cette température pendant une durée suffisante pour assurer l'infiltration de l'alliage en fusion dans l'espace rempli de particules de matière dure,
- laisser refroidir et démouler.

La demanderesse a réussi, de manière surprenante, à mettre en oeuvre un tel procédé d'infiltration en utilisant, conformément à la revendication 1, un moule en sable de fonderie, c'est-à-dire un moule en sable lié par une résine organique à deux composants tel qu'utilisé habituellement en fonderie. Ce résultat est particulièrement surprenant dans la mesure où les moules en sable de fonderie, que l'on utilise habituellement pour les techniques de fonderie de moulage en carapace (procédé Croning ou Shell Moulding) consistant à couler un métal en fusion dans le moule pour conférer au métal la forme de la pièce à réaliser, nécessitent d'utiliser un moule froid au moment de la coulée du métal. En effet, le sable du moule est lié par une résine susceptible de se désagréger si la température du moule dépasse 400 degrés Celsius environ; le métal coulé dans le moule ne détruit pas le moule, dans les techniques connues, parce que le métal forme immédiatement une coque solide séparant le métal en fusion et le sable du moule, protégeant ainsi le moule et évitant de lui faire subir des contraintes mécaniques provoquant sa désagrégation. On constate que, dans le procédé de la présente invention, le moule en sable de fonderie est lui-même chauffé à la température de fusion de l'alliage, c'est-à-dire à une température supérieure à sa température de dégradation, avant même que l'alliage ne pénètre dans le moule. Malgré cela, le moule est capable de remplir correctement son effet de retenir les matières et de former la pièce.

Le procédé de l'invention permet de réaliser des pièces massives en matière antiabrasion.

En alternative, le procédé peut être adapté pour réaliser des pièces composites comportant un noyau métallique recouvert de matière antiabrasion. Dans ce cas, avant introduction des particules de matière dure, on dispose au moins un noyau métallique dans le creux du moule en regard des parois de moulage. Ledit noyau doit avoir une température de fusion supérieure à la température à laquelle on chauffe ultérieurement l'ensemble pour la fusion de l'alliage.

Le procédé peut avantageusement être mis en oeuvre en utilisant un chauffage par induction. Lors du chauffage par induction dans un moule à sable, le moule tend à s'échauffer moins vite que l'alliage de brasage et que le noyau généralement métallique. Il en résulte que le moule tend à abaisser la température des matériaux qui sont à son contact, de sorte que la surface de contact de la pièce et son voisinage immédiat sont formés de particules de matière dure qui n'ont pas subi un échauffement trop important. Les particules conservent ainsi toutes leurs propriétés, et ne tendent pas à se diluer dans la matrice métallique lors du chauffage.

Pour améliorer la résistance à l'abrasion, la présente invention prévoit de réaliser une surface de contact antiabrasion, au moyen d'une couche de matériau composite contenant une distribution très régulière de poudre en une matière dure telle que du carbure de tungstène. La répartition doit être telle que la surface de contact antiabrasion soit l'enveloppe d'une couche la plus continue possible de particules de matière dure sensiblement jointives. Cette condition est atteinte lorsque la distribution de poudre de matière dure est une distribution "désordonnée compacte", sur une profondeur suffisante, d'au moins deux ou trois diamètres de grosse particule, à partir de la surface de contact antiabrasion. De la sorte, les efforts mécaniques appliqués à une particule se transmettent directement aux particules adjacentes, et les efforts sont ainsi répartis.

Dans le cas d'une poudre de matière dure à granularité à faible dispersion, une distribution désordonnée compacte de poudre de matière dure est réalisée lorsque la concentration en volume de matière dure est supérieure à 60 % environ du volume total. L'espace libre entre les particules est inférieur à 40 % du volume total.

On considèrera que l'empilement ou la "distribution désordonnée compacte" est atteinte après un tassement obtenu par vibration du volume rempli de particules. Les auteurs anglo-saxons parlent de "close packing". Les résultats expérimentaux publiés portent sur des grains sphériques sensiblement de même dimension.

Selon l'invention, on doit toutefois prendre en compte un important "effet de paroi" qui vient sensiblement perturber l'assemblage des grains.

Les études théoriques et expérimentales publiées notamment par R. Ben Aïm et P. Le Goff. Powder Technol. 1 (1967/68) 281-290 montrent l'existence d'une couche perturbée par effet de paroi. La couche perturbée est localisée au voisinage de la paroi, sur une épaisseur d'environ d/2 (d étant le diamètre moyen de la particule). Au delà de cette zone, l'empilement reprend une valeur moyenne constante si l'on considère la porosité. Dans le cas de la présente invention, nous devrons éventuellement considérer deux parois, à savoir la paroi constituée par le noyau à recharger et la surface antiabrasion qui pourra être limitée par une paroi de moule.

De préférence, la distribution de particules de matière dure est désordonnée compacte dans la couche de matériau composite sur une épaisseur au moins égale à six fois le diamètre des particules les plus grosses contenues dans la couche de matériau composite. De cette façon les efforts appliqués éventuellement à une particule de la surface antiabrasion sont mieux répercutés sur des particules de couches inférieures, et se trouvent mieux répartis. On réduit également ainsi les effets perturbateurs de parois mentionnés ci-dessus.

Dans la présente description et dans les revendications, le terme "granularité" est utilisé pour désigner globalement les caractéristiques dimensionnelles de grains de poudre, c'est à dire sensiblement leur diamètre moyen ou diamètre d'une sphère de même volume, chaque poudre présentant en principe une granularité à dispersion relativement faible.

D'autres objets, caractéristiques et avantages de la présente invention ressortiront de la description suivante de modes de réalisation particuliers, faite en relation avec les figures jointes, parmi lesquelles :
- la figure 1 représente schématiquement en coupe transversale une pièce mécanique revêtue d'une couche superficielle antiabrasion selon la présente invention ;
- la figure 2 représente schématiquement une vue de détail à plus grande échelle de la couche superficielle antiabrasion de la figure 1 ;
- les figures 3 à 7 illustrent les différentes étapes du procédé de réalisation d'une couche antiabrasion selon la présente invention, dans un mode de réalisation d'une partie de pièce en forme de plaque ;
- la figure 8 illustre schématiquement un procédé de réalisation de tube comportant une surface intérieure antiabrasion selon la présente invention ; et
- la figure 9 illustre, à plus grande échelle, la structure du moule en sable utilisé dans le procédé selon l'invention.

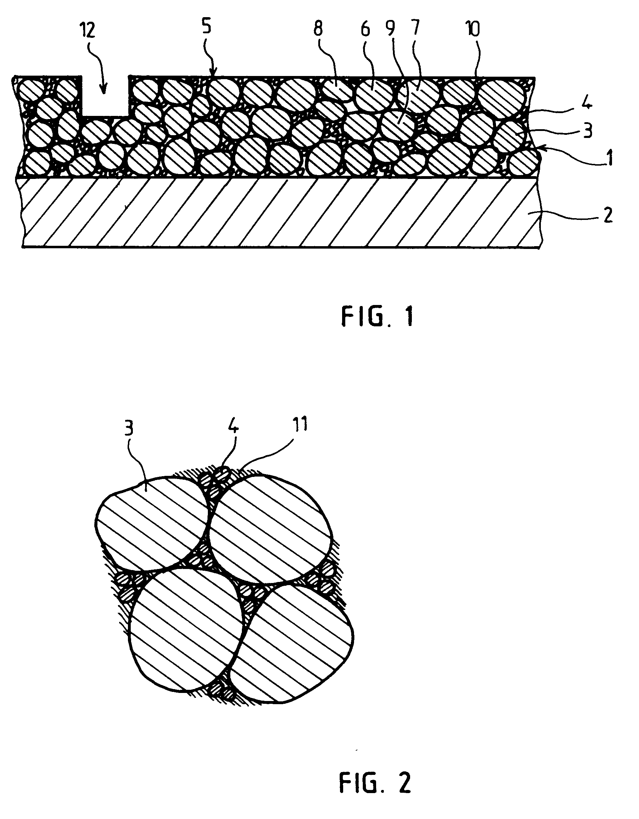

On a représenté sur la figure 1, en coupe transversale, une vue schématique d'une pièce revêtue d'une couche superficielle antiabrasion. Selon l'invention, la couche superficielle 1 antiabrasion est constituée par une couche de matériau composite à base de poudre de matière dure telle que du carbure de tungstène fondu, liée dans un alliage à base de nickel. La couche 1 est soudée en surface d'un noyau 2 métallique, le noyau 2 étant destiné à assurer le maintien mécanique de la pièce. Dans le mode de réalisation représenté, le noyau 2 est constitué d'une ébauche en forme de plaque, portant la couche antiabrasion 1.

La couche de matériau composite 1 contient une distribution désordonnée compacte de poudre de matière dure. Dans le mode de réalisation représenté, la poudre de matière dure comprend une première poudre 3, constituée de grains de carbure de tungstène fondu dont la granularité est relativement importante, et une seconde poudre 4 de grains de carbure de tungstène dont la granularité est plus faible. De préférence, la granularité de la première poudre est telle que les grains ont en moyenne environ un diamètre dix fois supérieur aux grains de la seconde poudre 4. On peut par exemple utiliser des grains de première poudre dont le diamètre est compris entre 1800 et 2400 microns, et des grains de seconde poudre 4 dont le diamètre est compris entre 100 et 400 microns.

On doit s'arranger pour que, dans la couche antiabrasion 1, les particules de matière dure soient sensiblement jointives, principalement au voisinage de la surface 5 qui est destinée à constituer la surface de contact antiabrasion de la pièce. Par exemple, la particule 6 est sensiblement jointive avec les particules adjacentes 7 et 8, et est également jointive avec la particule de couche inférieure 9. Les particules de couche extérieure telles que les particules 6, 7 et 8 sont disposées de telle manière qu'elles soient le plus possible tangentes à la surface externe 5 de la couche de matériau composite 1, la surface de contact antiabrasion 5 formant l'enveloppe de la couche superficielle continue des particules telles que les particules 6, 7 et 8. Les particules telles que la particule 10 de la seconde poudre 4 occupent les espaces compris entre les grains de première poudre, les particules de la seconde poudre 4 étant également sensiblement jointives les unes par rapport aux autres, et en contact des grains de première poudre.

De préférence, la distribution de particules de matière dure telles que les particules 6 ou les particules 10 est régulière dans la couche de matériau composite sur une épaisseur au moins égale à six fois le diamètre des particules de première poudre 3. On constate que, de cette manière, les propriétés antiabrasion de la surface sont améliorées, probablement par le fait que les contraintes mécaniques entre particules sont mieux réparties par un assemblage des grains plus compact.

Les particules de première poudre 3 et les particules de seconde poudre 4 sont noyées, dans la couche antiabrasion 1, dans une matrice métallique. Par exemple, la matrice métallique peut être constituée d'un alliage de type maillechort, à base de cuivre, de zinc et de nickel. D'autres alliages de type alliage de brasage peuvent être utilisés, dans la mesure où ils fondent à des températures adéquates et sont susceptibles de mouiller correctement les grains de matière dure tels que le carbure de tungstène fondu.

La figure 2 représente à plus grande échelle les grains de première poudre 3, les grains de deuxième poudre 4, et l'alliage 11 liant les grains.

On a représenté, à titre d'exemple, sur la figure 1 une surface 5 sensiblement plane comportant une zone accidentée 12, par exemple une rainure ou une cavité. La répartition de surface des grains de poudre doit être assurée sur toute la surface 5.

Les grains de première poudre 3 et de seconde poudre 4 sont avantageusement des particules sphéroïdales, obtenues par fusion, dispersion et refroidissement de gouttelettes. De telles particules sphéroïdales en carbure de tungstène sont par exemple produites par la demanderesse et vendues sous la marque Sphérotène.

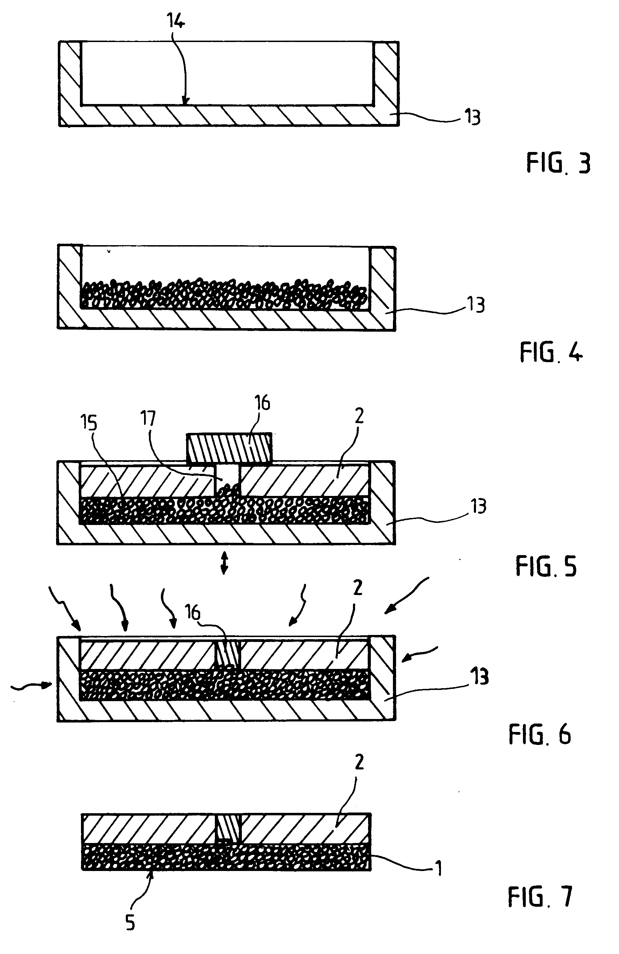

Le procédé de réalisation d'une surface antiabrasion selon la présente invention est illustré sur les figures 3 à 7. Ce procédé est une sorte de moulage particulier, ou de surmoulage sur une pièce métallique formant le noyau 2. Dans le mode de réalisation illustré, le procédé comprend les étapes principales suivantes :
a) selon la figure 3, on prépare un moule 13 creux comprenant des parois de moulage ayant la forme de la surface antiabrasion à réaliser ; par exemple, le fond 14 du moule est conformé comme devra l'être la surface antiabrasion ;
b) selon les figures 4 et 5, on dispose le noyau 2 en regard des parois de moulage du moule, et on remplit de grains de carbure de tungstène fondu ou autre matière dure l'espace 15 compris entre le noyau 2 et le moule 13 ; dans le cas d'un moule 13 en creux formant récipient, comme le représentent les figures, on peut disposer tout d'abord les grains de carbure de tungstène fondu dans le fond du moule, puis poser le noyau 2 en appui sur la couche de grains ; on vibre de préférence l'ensemble, pour tasser les grains, de sorte que les grains superficiels viennent le plus possible en appui contre la paroi 14 du moule et sont jointifs les uns aux autres;
c) selon la figure 5, on prépare une quantité suffisante d'un alliage 16 approprié, sous forme solide adaptée, en ménageant des moyens assurant la répartition ultérieure de l'alliage au cours de sa phase de fusion ultérieure ; par exemple on pose un bloc d'alliage 16 sur le noyau 2, et on ménage un canal 17 traversant le noyau et par lequel peut s'écouler l'alliage 16 pour pénétrer dans l'espace 15 contenant les grains de carbure de tungstène fondu ; l'alliage est un alliage de brasage susceptible de mouiller les grains de carbure de tungstène fondu et le noyau 2, et de fondre à une temperature inférieure à la température de fusion du noyau 2 et du moule 13
d) selon la figure 6, on chauffe l'ensemble pièce-moule-alliage, par un procédé adapté, jusqu'à obtenir la fusion de l'alliage de brasage, son infiltration à travers les grains de carbure, et son soudage au noyau métallique 2 devant être rechargé ; l'ensemble est pour cela chauffé à une température supérieure à la température de fusion de l'alliage, et inférieure à la température de fusion du noyau 2 et du moule 13 ;
e) on laisse refroidir, et on démoule, comme le représente la figure 7. On obtient alors une plaque comprenant le noyau 2 et la couche antiabrasion 1.

Le même procédé d'infiltration peut être utilisé en l'absence d'un noyau 2.

Selon l'invention, la partie active du moule 13, comprenant les faces de moulage, est réalisée en sable de fonderie lié par des résines habituellement utilisées dans la technique de fonderie.

Lorsqu'un tel moule en sable est utilisé dans un procédé dans lequel le chauffage s'effectue par des moyens d'induction magnétique, on constate que l'on peut utiliser un moule de fonderie classique sans parois extérieures.

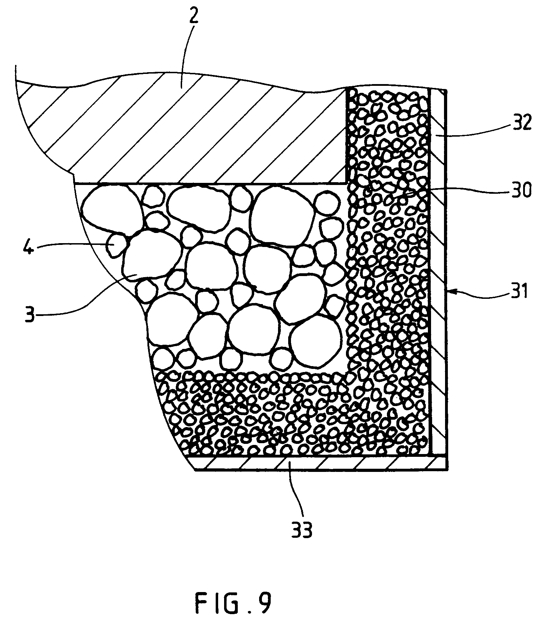

Par contre, si l'on veut assurer la fusion de l'alliage en introduisant l'ensemble dans un four traditionnel, fonctionnant par convection et conduction, il faut alors prévoir d'insérer les parois actives de moule en sable dans un châssis formé de parois extérieures métalliques ou en matériaux réfractaires, les parois extérieures assurant le maintien mécanique du moule. Par exemple, comme le représente schématiquement en coupe la figure 9, le moule comprend une paroi intérieure 30 de moulage en sable de fonderie lié par des résines, et un châssis 31 métallique ou en matériau réfractaire. Le châssis 31 peut être formé par assemblage de plusieurs plaques 32 et 33 que l'on peut dissocier après moulage. La paroi intérieure 30 de moulage en sable présente une épaisseur suffisante pour former les nervures, rainures ou autres irrégularités de surface que l'on désire donner à la couche antiabrasion à réaliser.

Après refroidissement, l'ensemble est démonté, et la partie en sable du moule est le plus souvent détruite.

La réalisation du moule est effectuée au cours d'une étape préalable de prise d'empreinte : au cours de cette étape, on prépare le sable de moulage mélangé aux résines, et, avant prise des résines, on applique sur le mélange de sable et de résines une pièce modèle présentant la forme extérieure de la surface antiabrasion de la pièce définitive à réaliser. On prend ainsi l'empreinte de la pièce-modèle, et, après prise des résines, le moule en sable garde la forme de la surface antiabrasion à réaliser. On retire la pièce modèle.

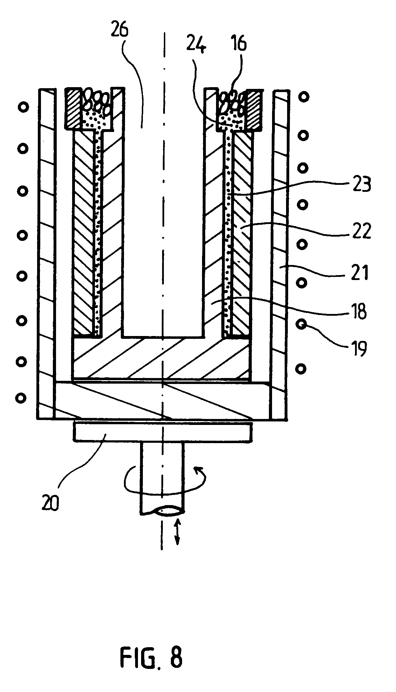

Un autre exemple de réalisation est illustré sur la figure 8. Il s'agit de la réalisation d'un rechargement à l'intérieur d'un cylindre métallique. Dans ce cas, le moule est un tube réfractaire 18 en sable de fonderie aggloméré. Le dispositif de chauffage peut être un inducteur 19 alimenté par un générateur de fréquence fonctionnant par exemple à 10 000 hertz. Un support 20 permet une mise en rotation pendant la chauffe, ainsi que la vibration de l'ensemble. On peut prévoir avantageusement une isolation extérieure du tube par un tube céramique ou des réfractaires fibreux 21, limitant les déperditions thermiques et'permettant ainsi une montée en température plus rapide. Le moule tubulaire réfractaire 18 est inséré dans le tube en métal 22 qui doit être revêtu de la couche antiabrasion. Un espace est ménagé sur toute la périphérie du moule réfractaire 18 entre ledit moule et le tube en métal 22. Des grains de carbure de tungstène sont empilés dans l'espace 23 compris entre le moule 18 et le tube 22, en vibrant. Une quantité complémentaire 24 de grains de carbure est disposée en partie supérieure devant l'entrée de l'espace 23. Cette quantité complémentaire 24 est destinée à être introduite dans l'espace 23 lorsque l'on chauffe l'ensemble, pour compenser l'effet de dilatation différentielle entre le tube en métal 22 et le moule 18. Dans ces conditions, on comprend qu'il faut presser la quantité complémentaire 24 à l'intérieur de l'espace 23, tout en vibrant, pendant l'échauffement de l'ensemble. L'alliage de brasage est introduit à la partie supérieure de l'espace 23, et est chauffé par l'inducteur 19. L'inducteur 19 chauffe également, et simultanément, le tube métallique 22 à revêtir. L'intérieur du moule réfractaire 18 peut être rempli d'un matériau réfractaire isolant 26.

La demanderesse a notamment pu réaliser par cette méthode des tubes revêtus intérieurement de dépôts à base de carbure de tungstène de 2 à 7 mm d'épaisseur pour les dimensions suivantes :
- diamètre extérieur 300 mm, hauteur 600 mm, diamètre intérieur 260 mm, épaisseur de carbure 6 mm ;
- diamètre extérieur 30 mm, diamètre intérieur 15 mm, hauteur 300 mm, épaisseur de carbure 2 mm.

Dans ces exemples, les différences entre les coefficients de dilatation du revêtement à base de carbure de tungstène et du métal du tube 22 à revêtir entraînent, lors du refroidissement, une mise en compression du revêtement, ce qui accroît d'autant la fiabilité du procédé.

Dans certains cas, on peut être amené à utiliser une étape préalable pour préparer la surface du noyau 2, notamment la surface interne du tube cylindrique 22 à revêtir, pour permettre un bon soudage de la brasure. Cette étape préalable consiste à réaliser les opérations suivantes :
- meulage ou grenaillage de la surface de noyau 2,
- métallisation par un voile d'alliage de type nickel / chrome / bore / silicium connu sous la dénomination d'alliage "auto-fusible" ; cette métallisation est réalisée à l'aide d'un chalumeau oxyacétylénique équipé d'un dispositif d'alimentation de poudre, ou d'un chalumeau de métallisation à poudre classique.

La poudre de carbure de tungstène fondu ou autre matière dure que l'on utilise pour réaliser la surface antiabrasion peut avantageusement être constituée d'un mélange préhomogénéisé de deux poudres 3 et 4 à granularités différentes, comme cela a été décrit en relation avec les figures 1 et 2, et comme cela est représenté sur la figure 9. La poudre est avantageusement constituée de grains pour la plupart sphéroïdaux, qui sont tous en une même matière, par exemple le carbure de tungstène fondu.

Des résultats particulièrement avantageux ont été obtenus en utilisant une poudre de carbure de tungstène fondu contenant environ 4 % en poids de carbone. Une telle poudre constitue en effet un composé stable chimiquement, qui ne donne pas lieu à une dissolution/reprécipitation du carbure de tungstène dans l'alliage lors de l'étape d'infiltration. On conserve ainsi les dimensions, la compacité et les caractéristiques métalliques du carbure de tungstène : le carbure fondu, lui-même plus dur, accroît la dureté de la surface antiabrasion obtenue, et par conséquent sa résistance à l'abrasion et à l'érosion ; l'absence de dissolution permet de choisir la taille des grains dès le début de fabrication, en fonction de la taille désirée des grains dans la surface antiabrasion définitive ; l'absence de dissolution favorise le maintien de la compacité maximale, car il ne se produit pas de réarrangement ou de redistribution de grains au cours de l'infiltration. La stabilité du composé ne nécessite pas de refroidir rapidement après infiltration de l'alliage.

La granularité du sable utilisé pour la confection du moule peut être différente de celle des grains de carbure de tungstène de la surface antiabrasion. Toutefois, la demanderesse a constaté que des résultats plus réguliers et des états de surface meilleurs sont obtenus lorsque les grains de sable constituant la paroi intérieure 30 du moule 13 ont un diamètre moyen un peu inférieur à celui des grains 4 les plus petits de carbure de tungstène ; le sable peut avantageusement avoir un diamètre moyen de grains de 1 à 3 fois inférieur au diamètre moyen des grains de carbure de tungstène, comme cela est illustré sur la figure 9.

Dans les cas où l'on veut obtenir une surface de contact 5 particulièrement résistante, on peut avantageusement utiliser une étape ultérieure d'élimination, par rectification ou polissage, de la zone superficielle de la couche 1 de matériau antiabrasion. Un enlèvement de matière sur une profondeur d'environ d/2, d étant le diamètre des grosses particules de matière dure, élimine sensiblement la zone des grains perturbée par l'effet de paroi.

Une application particulièrement intéressante du procédé de l'invention est la réalisation de plaques de défibrage ou d'affinage pour la fabrication de la pâte à papier, ou de plaques de broyeurs pour céramique. La surface de contact de telles plaques est en effet conformée pour présenter des nervures et des rainures.

Dans le cas des broyeurs pour céramique, la réalisation d'une telle plaque est actuellement assurée par les techniques classiques de soudure, et conduit à des opérations manuelles très onéreuses.

Dans le cas des plaques pour la fabrication de la pâte à papier, la précision dimensionnelle requise empêche de recourir aux techniques classiques de soudure. On recourt actuellement aux procédés de fonderie traditionnels, mais ces procédés excluent l'insertion de particules solides de matière dure dans le métal de coulée : une telle coulée produirait des résultats tout à fait insuffisants, et notamment une répartition très inégale et incontrôlée des grains de carbure dans la couche antiabrasion.

Les procédés d'infiltration traditionnels sont également inappropriés, car ils requièrent des structures de moules très onéreuses en céramique ou en carbone.

Une autre application intéressante de la présente invention est la fabrication de tubes dont l'alésage intérieur comprend une surface antiabrasion. Le procédé de réalisation selon l'invention conduit à des économies substancielles dans la réalisation de tels tubes, et produit un état de surface et une forme de surface très précis, qu'il n'est pas possible d'obtenir à faible coût avec les techniques traditionnelles.

La présente invention n'est pas limitée aux modes de réalisation qui ont été explicitement décrits, mais elle en inclut les diverses variantes et généralisations contenues dans le domaine des revendications ci-après.

## Revendications

1. Procédé de réalisation d'une pièce à surface antiabrasion, comprenant les étapes suivantes :
a) préparer un moule (13) creux comprenant des parois de moulage ayant la forme de la surface (5) antiabrasion à réaliser,
b) introduire des particules de matière dure telle que le carbure de tungstène dans l'espace intérieur creux du moule (13), en vibrant l'ensemble, de sorte que les particules superficielles viennent au maximum en appui contre les parois du moule et sont jointives les unes aux autres,
c) préparer une quantité suffisante d'un alliage approprié (16) sous forme adaptée pour assurer une répartition ultérieure de l'alliage au cours de sa phase de fusion ultérieure, l'alliage étant un alliage de brasage susceptible de mouiller les particules de matière dure et de fondre à une température inférieure a la température de fusion des particules de matière dure et du moule (13),
d) chauffer l'ensemble à une température supérieure à la température de fusion de l'alliage et inférieure à la température de fusion des particules de matière dure et du moule (13),
e) assurer l'infiltration de l'alliage en fusion dans l'espace rempli de particules de matière dure,
f) laisser refroidir et démouler,
caractérisé en ce que le moule comprend une paroi de moulage en sable de fonderie lié par des résines.

2. Procédé selon la revendication 1, caractérisé en ce que, entre l'étape a) et l'étape b), on dispose au moins un noyau (2) métallique en regard des parois de moulage du moule (13), ledit noyau (2) ayant une température de fusion supérieure à la température d'échauffement de l'ensemble au cours de l'étape d).

3. Procédé selon l'une des revendications 1 ou 2, caractérisé en ce que, au cours de l'étape d), on chauffe l'ensemble par induction magnétique.

4. Procédé selon l'une des revendications 1 ou 2, caractérisé en ce que :
- le moule (13) comprend une paroi intérieure (30) de moulage en sable de fonderie lié par des résines classiques, la paroi intérieure (30) de moulage étant soutenue par un châssis (31) de maintien en métal ou en matériau réfractaire,
- au cours de l'étape d), on chauffe l'ensemble par un four traditionnel à conduction et rayonnement.

5. Procédé selon l'une quelconque des revendications 1 à 4, caractérisé en ce que le sable du moule présente un diamètre moyen de grains de un à trois fois inférieur au diamètre moyen de grains de matière dure de la couche antiabrasion.

6. Procédé selon l'une quelconque des revendications 1 à 5, caractérisé en ce que, pendant l'étape de chauffage, on introduit une quantité complémentaire (24) de poudre de matière dure dans le moule, en vibrant, pour compenser sa dilatation différentielle.

7. Procédé selon l'une quelconque des revendications 1 à 6, caractérisé en ce qu'il comprend une étape préalable de préparation d'un noyau (2) devant recevoir la couche antiabrasion, l'étape de préparation comprenant les phases suivantes :
- meulage ou grenaillage de la surface,
- métallisation par un voile d'alliage de type nickel/chrome/bore/silicium auto-fusible, à l'aide d'un chalumeau.

8. Procédé selon l'une quelconque des revendications 1 à 7, caractérisé en ce qu'il comprend une étape préalable de prise d'empreinte, au cours de laquelle on prépare le moule (13) en prenant l'empreinte d'une pièce modèle avant prise des résines.

9. Procédé selon l'une quelconque des revendications 1 à 8, caractérisé en ce qu'il comprend une étape ultérieure d'élimination, par rectification ou polissage superficiel, de la zone d'empilement des grains perturbée par effet de paroi, l'épaisseur à éliminer étant sensiblement égale à la moitié du diamètre des grosses particules de matière dure.

10. Procédé selon l'une quelconque des revendications 1 à 9, caractérisé en ce que l'on choisit la dimension principale moyenne des particules de matière dure, constituant l'ossature de la couche de matériau composite, de telle manière que le diamètre moyen des grosses particules est inférieur ou égal au sixième de l'épaisseur totale de la couche de matériau composite.

11. Procédé selon l'une quelconque des revendications 1 à 10, caractérisé en ce que la poudre de matière dure est constituée de grains de carbure de tungstène fondu contenant environ 4 % en poids de carbone, constituant un composé stable chimiquement ne donnant pas lieu à une dissolution/ reprécipitation du carbure de tungstène dans l'alliage lors de l'étape d'infiltration.

12. Application du procédé selon l'une quelconque des revendications 1 à 11, caractérisée en ce que la surface antiabrasion (5) est conformée pour présenter des nervures et des rainures, la pièce consistant en une plaque de broyage pour l'industrie de la céramique ou en une plaque de défibrage ou d'affinage pour la fabrication de la pâte à papier.

13. Application du procédé selon l'une quelconque des revendications 1 à 11, caractérisée en ce que la surface antiabrasion (5) est tubulaire.

14. Application selon la revendication 13, caractérisée en ce que la surface de contact antiabrasion (5) est la surface intérieure d'un tube.

## Claims

1. A process for producing a part with an abrasion-proof surface involving the following stages:
a) a cavity mould (13) is prepared which has mould walls having the same shape as abrasion-proof surface (5) to be produced,
b) particles of a hard material such as tungsten carbide are introduced into mould cavity (13) and the assembly is vibrated so that the surface particles come into as close as possible contact with the walls of the mould and are contiguous with each other,
c) a sufficient quantity of an appropriate alloy (16) in a suitable form is prepared to ensure subsequent distribution of the alloy during its later melting phase, the alloy being a soldering alloy capable of wetting the particles of hard material and melting at a temperature which is less than the melting point of the particles of hard material and of mould (13),
d) the assembly is heated to a temperature which exceeds the melting point of the alloy but is less than the melting point of the particles of hard material and of mould (13),
e) the infiltration of the molten alloy into the space filled with particles of hard material is ensured,
f) the assembly is allowed to cool and the mould is stripped,
characterized in that the mould has a wall of foundry sand bonded by resins.

2. A process as claimed in claim 1, characterized in that, between stage a) and stage b), at least one metal core (2) is placed opposite the walls of mould (13), said core (2) having a melting point which is higher than the temperature to which the assembly is heated during stage d).

3. A process as claimed in claim 1 or 2, characterized in that, during stage d), the assembly is heated by magnetic induction.

4. A process as claimed in claim 1 or 2, characterized in that:
- mould (13) has an internal wall (30) made of foundry sand bonded by conventional resins, internal wall (30) being supported by a moulding box (31) made of metal or a refractory material,
- during stage d), the assembly is heated by a traditional conduction and radiation furnace.

5. A process as claimed in any of claims 1 to 4, characterized in that the sand of the mould has an average grain diameter of one to three times less than the average diameter of the grains of hard material for the abrasion-proof layer.

6. A process as claimed in any of claims 1 to 5, characterized in that, during the heating stage, an additional quantity (24) of hard material powder is introduced into the mould and vibrated in order to compensate for differential expansion.

7. A process as claimed in any of claims 1 to 6, characterized in that it includes a preliminary stage to prepare a core (2) intended to receive the abrasion-proof layer; this preparation stage involves the following steps:
- Grinding or shot blasting of the surface,
- Metallisation by applying a film of self-fusing nickel-chromium-boron-silicon type alloy using a torch.

8. A process as claimed in any of claims 1 to 7, characterized in that it includes a preliminary mould impression stage during which mould (13) is prepared by taking the impression of a pattern before the resins set.

9. A process as claimed in any of claims 1 to 8, characterized in that it involves a subsequent elimination stage by surface treatment or polishing of the zone in which grains are disrupted by the wall effect, the thickness to be removed being essentially equal to half the diameter of the large particles of hard material.

10. A process as claimed in any of claims 1 to 9, characterized in that the main average dimension of the particles of hard material which make up the framework of the layer of composite material is selected so that the average diameter of the large particles is less than or equal to one sixth of the total thickness of the layer of composite material.

11. A process as claimed in any of claims 1 to 10, characterized in that the powder of hard material consists of grains of melted tungsten carbide containing roughly 4% carbon by weight which make up a chemically stable compound which does not give rise to dissolution/reprecipitation of tungsten carbide in the alloy during the infiltration stage.

12. An embodiment of the process as claimed in any of the claims 1 to 11, characterized in that abrasion-proof surface (5) is shaped so that it has ribs and grooves, the part consisting of a grinder plate for the ceramics industry or a defibration or refining plate for the production of paper pulp.

13. An embodiment of the process as claimed in any of claims 1 to 11, characterized in that abrasion-proof surface (5) is tubular.

14. An embodiment as claimed in claim 13, characterized in that abrasion-proof contact surface (5) is the inner surface of a tube.

## Patentansprüche

1. Verfahren zur Herstellung eines Werkstückes mit abriebfester Oberfläche, bestehend aus den folgenden Stufen:
a) Vorbereitung einer hohlen Form (13), die Gießwände mit der Form der herzustellenden abriebfesten Oberfläche (5) aufweist,
b) Einleitung von Teilchen eines harten Materials, wie bspw. Wolframcarbid, in den hohlen Innenraum der Form (13), wobei die Gesamtheit derart vibriert wird, daß sich die Teilchen an der Oberfläche höchstens an den Wänden der Form anbauen und dicht aneinander anstoßen,
c) Vorbereitung einer ausreichenden Menge einer geeigneten Legierung (16) in einer Art und Weise, die zur Sicherstellung einer späteren Verteilung der Legierung im Verlauf ihrer späteren Schmelzphase angepaßt ist, wobei die Legierung eine Lötlegierung ist, welche geeignet ist für ein Benetzen der Teilchen des harten Materials und für ein Schmelzen bei einer Temperatur niedriger als die Schmelztemperatur der Teilchen des harten Materials und der Form (13),
d) Erwärmen der Gesamtheit auf eine Temperatur höher als die Schmelztemperatur der Legierung und niedriger als die Schmelztemperatur der Teilchen des harten Materials und der Form (13),
e) Sicherstellung der Infiltration der geschmolzenen Legierung in den mit den Teilchen des harten Materials gefüllten Raum,
f) Zulassung einer Abkühlung und Ausformung,
dadurch gekennzeichnet, daß die Form eine Gießwand aus Gießereisand gebunden durch Harze aufweist.

2. Verfahren nach Anspruch 1, dadurch gekennzeichnet, daß man zwischen der Stufe a) und der Stufe b) wenigstens einen Metallkern (2) gegenüber den Gießwänden der Form (13) anordnet, wobei der Kern (2) eine Schmelztemperatur höher als die Erwärmungstemperatur der Gesamtheit im Verlauf der Stufe d) hat.

3. Verfahren nach einem der Ansprüche 1 oder 2, dadurch gekennzeichnet, daß man im Verlauf der Stufe d) die Gesamtheit durch magnetische Induktion erwärmt.

4. Verfahren nach einem der Ansprüche 1 oder 2, dadurch gekennzeichnet, daß:
- die Form (13) eine innere Gießwand (30) aus Gießereisand gebunden durch klassische Harze aufweist, wobei die innere Gießwand (30) durch einen Halte-Formkasten (31) aus Metall oder feuerfestem Material gestützt wird,
- im Verlauf der Stufe d) die Gesamtheit durch einen herkömmlichen Wärmeleitungs- und Strahlungsofen erwärmt wird.

5. Verfahren nach einem der Ansprüche 1 bis 4, dadurch gekennzeichnet, daß der Sand der Form einen mittleren Durchmesser der Körner aufweist, der um das Ein- bis Dreifache kleiner ist als der mittlere Durchmesser der Körner des harten Materials der abriebfesten Schicht.

6. Verfahren nach einem der Ansprüche 1 bis 5, dadurch gekennzeichnet, daß man während der Stufe des Erwärmens eine Komplementärmenge (24) des Pulvers des harten Materials in die Form bei einer Vibration einführt, um seine differentielle Wärmeausdehnung zu kompensieren.

7. Verfahren nach einem der Ansprüche 1 bis 6, dadurch gekennzeichnet, daß es eine vorhergehende Stufe der Vorbereitung eines Kerns (2) vor der Aufnahme der abriebfesten Schicht aufweist, wobei die Stufe der Vorbereitung die folgenden Phasen ausweist:
- Schleifen oder Sandstrahlen der Oberfläche,
- Metallisierung durch eine dünne Schale der selbstschmelzenden Legierung des Typs Nickel/Chrom/Bor/Silizium mittels eines Lötbrenners.

8. Verfahren nach einem der Ansprüche 1 bis 7, dadurch gekennzeichnet, daß es eine vorhergehende Stufe der Aufnahme eines Aufdruckes aufweist, in deren Verlauf man die Form (13) vorbereitet durch eine Abnahme des Aufdruckes eines Modellstückes vor der Übernahme der Harze.

9. Verfahren nach einem der Ansprüche 1 bis 8, dadurch gekennzeichnet, daß es eine spätere Stufe der Eliminierung durch ein Schleifen oder ein Oberflächenpolieren der Stapelzone der Körner aufweist, die durch die Wirkung der Wand gestört ist, wobei die zu eliminierende Dicke im wesentlichen gleich der Hälfte des Durchmessers der großen Teilchen des harten Materials ist.

10. Verfahren nach einem der Ansprüche 1 bis 9, dadurch gekennzeichnet, daß man die mittlere Hauptabmessung der Teilchen des harten Materials, welche das Skelett der Schicht des zusammengesetzten Materials bilden, in solcher Art und Weise auswählt, daß der mittlere Durchmesser der großen Teilchen kleiner oder gleich der sechsfachen Gesamtdicke der Schicht des zusammengesetzten Materials ist.

11. Verfahren nach einem der Ansprüche 1 bis 10, dadurch gekennzeichnet, daß das Pulver des harten Materials aus geschmolzenen Wolframcarbidkörnern besteht, die etwa 4 Gew.-% Kohlenstoff enthalten, um eine chemisch stabile Verbindung zu bilden, die keiner Auflösung/wiederholten Ausfällung des Wolframcarbids in der Legierung bei der Stufe der Infiltration unterliegt.

12. Anwendung des Verfahrens nach einem der Ansprüche 1 bis 11, dadurch gekennzeichnet, daß die abriebfeste Oberfläche (5) gestaltet ist für eine Darbietung von Rippen und Rillen, wobei das Werkstück aus einer Zerkleinerungsplatte für die keramische Industrie oder einer Zerfaserungs- oder Raffinationsplatte für die Herstellung von Papiermasse besteht.

13. Anwendung des Verfahrens nach einem der Ansprüche 1 bis 11, dadurch gekennzeichnet, daß die abriebfeste Oberfläche (5) rohrförmig ist.

14. Anwendung nach Anspruch 13, dadurch gekennzeichnet, daß die abriebfeste Berührungsoberfläche (5) die Innenfläche eines Rohres ist.
